# EUROPEAN PATENT SPECIFICATION

(11) **EP 0 906 744 B1**
(45) Date of publication and mention of the grant of the patent: **22.10.2003**
(21) Application number: 96910897.6
(22) Date of filing: 24.04.1996
(51) Int. Cl.: A47K 11/02

(54) **COMPLETELY AUTOMATIC WATERLESS CLOSET**
VOLLSTÄNDIG AUTOMATISCHE WASSERLOSE TOILETTE
TOILETTE SANS EAU ET ENTIEREMENT AUTOMATIQUE

(43) Date of publication of application: 07.04.1999
(73) Proprietor: He, Englong, Beijing 100029 (CN)
(72) Inventor: He, Englong, Beijing 100029 (CN)
(74) Representative: Lucht, Silvia
(86) International application number: PCT/CN96/00027
(87) International publication number: WO 97/039673

(56) References cited:
- WO-A-94/10893
- CH-A- 525 134
- FR-A- 2 725 421
- US-A- 2 671 906
- US-A- 3 619 822
- US-A- 3 693 193
- US-A- 4 025 969
- US-A- 5 177 819

## Description

### Technical Field

The present invention relates to a toilet equipment, in particular, to a dry and sealed toilet equipment.

### Background Technology

At requirement for environmental protection and the request for returning to nature, people are, in the past around hundred years, more and more aware of the defects of flush toilet that embodies the modern civilization. Therefore there have been various inventions, such as WO97/2775, which puts forward a toilet seat stool without flushing. Though said invention has features of prevention cross-contamination, convenience and sanitation, its transmission is electrically controlled, which may lead to easy mal-operation when user is not familiar with the structure of the seat stool and make it inappropriate in the area without electricity and water, such as sea beach etc.

US-A-3693193 and CH-A-525134 discloses a fully automatically toilet ware without flushing, including a case body, a shaped cavity, a seat ring, a cover for a plastic bag and an open-close pulling mechanism for controlling connection between said shaped cavity and an excrement holding case. The case body is fixed on a pedal which has its rear end hinged with a base and its front end structured as a swing end. The pedal is hinged with a crank for controlling the operation of the open-close pulling mechanism. These toilets have the disadvantage that the shaped cavity is not automatically closed after the toilet has been used.

### Summary

The objective of the present invention is to provide a dry and sealed toilet ware controlled by the weight of human body.

One solution to achieve the objective of the present invention is: a fully automatic toilet ware without flushing, including a case body; a shaped cavity; a seat ring provided on said cavity; a plastic cover over the periphery of said case body; an open-close pulling mechanism to pull plastic bag, provided in said case body for controlling the connection between said shaped cavity and an excrement-holding box fixed under said case body; said case body is fixed on one pedal, and said pedal has one end hinged with base, said the front end of said pedal is a swing end, and there is a pressing spring fixed between its end and the base, the pedal is hinged at least with one crank for controlling the operation of said open-close pulling mechanism, said crank has one end rolling against the supporting board of said base, and the other end is connected with said open-close pulling mechanism. Said open-close pulling mechanism includes a sealing means and a pulling means, said sealing means has a pair of upper sealing doors mounted on an upper partition board and a pair of lower sealing doors mounted on a lower partition board and said sealing doors have respectively springs which may force them to close and said upper and lower sealing doors are alternatively opened or closed, and the two upper doors are connected with two pulling ropes through pulleys and the two lower doors are connected with said two upper doors through a pair of pulling ropes and pulleys, and the spring of the upper doors is stronger than the spring of the lower doors, said pulling means is provided between said upper and lower sealing doors and has a pulling wheel mounted on a transmission shaft, a tension wheel and a chain wheel mounted on said transmission shaft, and between said chain wheel and pulling wheel there is a surpassing clutch.

At least one vertically movable controlling rod *can be* provided on the periphery of said plastic cover, said seat ring has one end hinged with said shaped cavity, the controlling rod has the upper end against said ring via a spring fixed thereon, at least one gear is rotatably fixed at the lower part of said controlling rod, said gear is joggled with one fixed rack and one sliding rack, said open-close pulling mechanism is connected with said sliding rack.

The present invention fully utilizes the weight of human body to automatically control the operation of said open-close pulling mechanism, and it is reliable and has good adaptability and may be widely used in such cases as in family, tourist area, long-distance bus, train, boat and aircraft etc.

### Summary of drawings

The other objectives, structure and advantages of the present invention may be better understood with the detailed description by reference to the following drawings.
Fig. 1 is a longitudinal section view of one embodiment of the present invention;
Fig. 2 is a perspective view of one embodiment of the seal structure of Fig. 1;
Fig. 3 is a perspective view of another embodiment of the seal structure of Fig. 1;
Fig. 4 is a side view of said pulling mechanism of Fig. 1;
Fig. 5 is a half-sectional view along the line of A-A of Fig. 4;
Fig. 6 is a top view with partial sectional view at the closing time of another embodiment of the open-close pulling mechanism of the present invention;
Fig 7 is a view cut along B-B line of Fig. 6;
Fig 8 is a perspective view of the pulling roller in Fig. 6 and 7;
Fig 9 is a top view of the pulling roller at the state of opening as shown in Figs. From 6-8;
Fig 10 is a view cut along C-Cline of Fig. 9;
Fig 11 is a perspective view of another embodiment of the present invention;
Fig. 12 is a top view of the seat ring in Fin. 11;
Fig. 13 is a view showing the transmission mechanism mounted in the case body of Fig. 12;
Fig. 14 is a sectional view cut along D-D line of Fig. 13;
Fig. 15 is a view showing another transmission case body of Fig. 14;
Fig. 16 is a view showing the sealing structure along E-E line of Fig. 15;

### Best Mode of Embodiment of the Present Invention

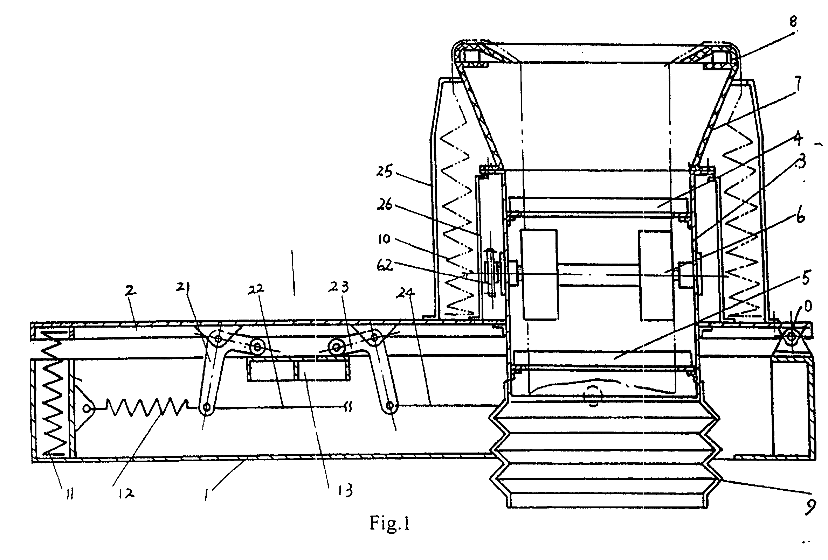

Referring to Fig. 1, the toilet ware of the present invention includes a case body 3, a shaped cavity 7 formed on said case body 3, a seat ring 8 provided under said shaped cavity, a cover of plastic bag 10 provided over the periphery of said case body, wherein said cover is formed by outer protective board 25 and inner protective cover 26 and said plastic bag is provided between the two protective boards. Said plastic bag 10 is preferably dissoluble plastics. Said case body 3 is mounted on a pedal 2 which has the rear end hinged with a base 1 and may swing around a supporting point O. Between said base and the front a end of said pedal 2 is provided with a press spring 11. And said pedal 2 is hinged with two cranks 21,23 which control the operation of said open-close pulling mechanism provided in said case body 3. Each of said cranks has one end rolled on a supporting board 13 of said base 1, and the other end connects respectively to said open-close pulling mechanism via pulling ropes 22 and 24.

The moving directions of said cranks 21 and 23 are opposite and a reset spring 12 is provided between said swing end of said crank 21 and said base

The lower end of said case body 3 connects a excrement holding case (not shown) via a flexible tube 9

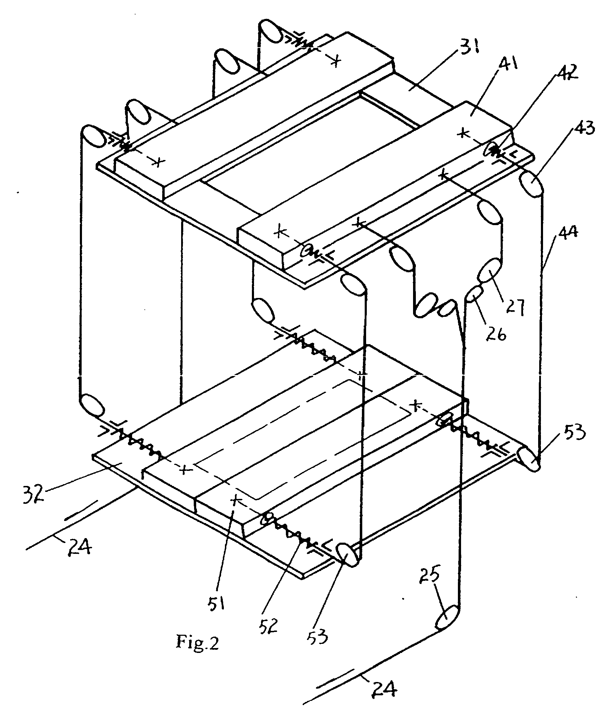

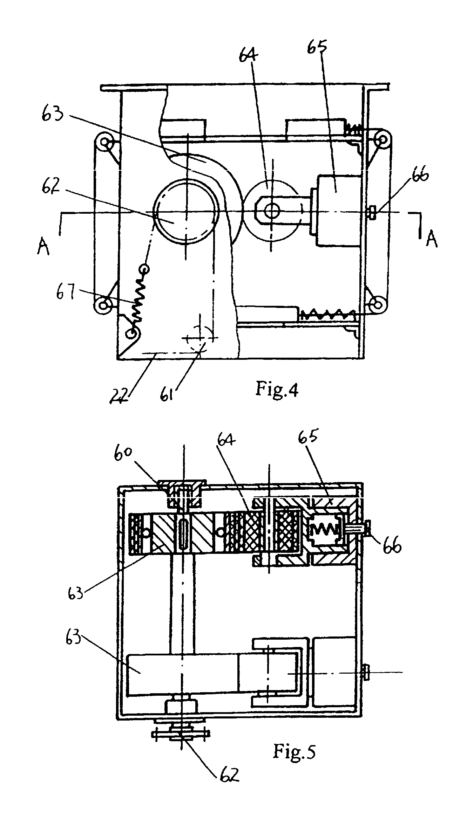

Referring to Figs 2-5. The open-close pulling mechanism of the present invention includes a sealing means and a pulling means Said sealing means has a pair of upper sealing doors 41 mounted on an upper partition board 31 and a pair of lower sealing doors 51 mounted on an lower partition board 32. Said sealing doors have respectively spring 42 and 52 which may force them to close Said upper and lower doors are to be alternatively closed and said two upper sealing doors 41 connect to two pulling ropes 24 via pulleys 25,26 and 27 while said two lower sealing doors 51 connect to the upper sealing doors 41 via a pair of pulling ropes 44 and pulleys 43 and 53 Said rope 24 connects with said crank 23 and the force of said spring 42 is bigger than that of said spring 52 Said pulling means is provided between said upper and lower doors 41 and 51, and has a pulling wheel 63 mounted on a transmission shaft 60 Said pulling wheel 63 should be preferable two In addition, there is also provided a tension wheel 64 cooperated with said pulling wheels 63 Said tension wheel 64 adjusts the press between itself and pulling wheel 63 via adjusting screw 66 and support 65. On said transmission shaft there is provided a chain wheel 62 which is turned by a chain connected on said rope 22 and the other end of said chain connects to chain said case body 3 via an extension spring 67. The force of said reset spring 12 is stronger than that of said extension spring 67.

Said crank 21 connects to said pulling rope 22 which controls said sealing means, and said crank 23 connects to said pulling rope 24 which controls said pulling means.

Between said chain wheel 62 and pulling wheel 63, there is provided a surpassing clutch which provided within said pulling wheel 63 or on said chain wheel 62. The simplest chain wheel 62 is an ordinary flywheel widely used on bike.

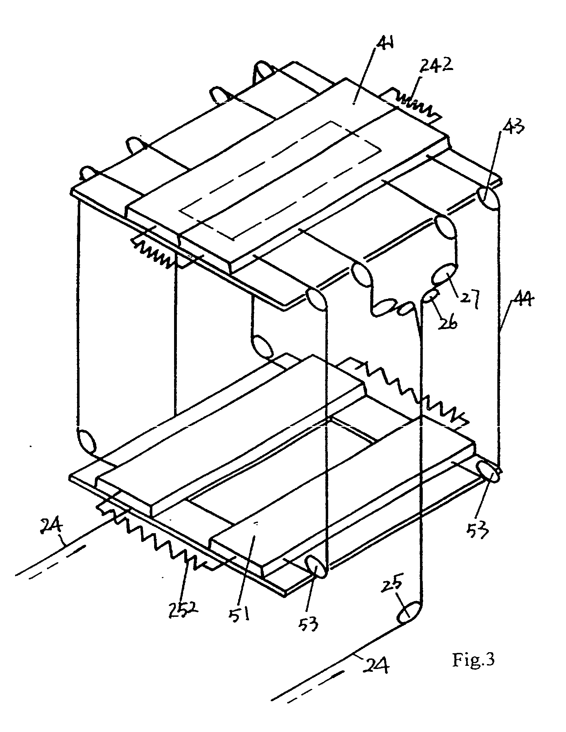

Fig.3 shows another embodiment of said seal structure. It differs from that of Fig.2 in that said press springs 42 and 52 are replaced by extension springs 242 and 252, and that Fig. 2 shows the upper door is open and the lower door is closed while Fig.3 shows the upper door is closed and the lower door is open.

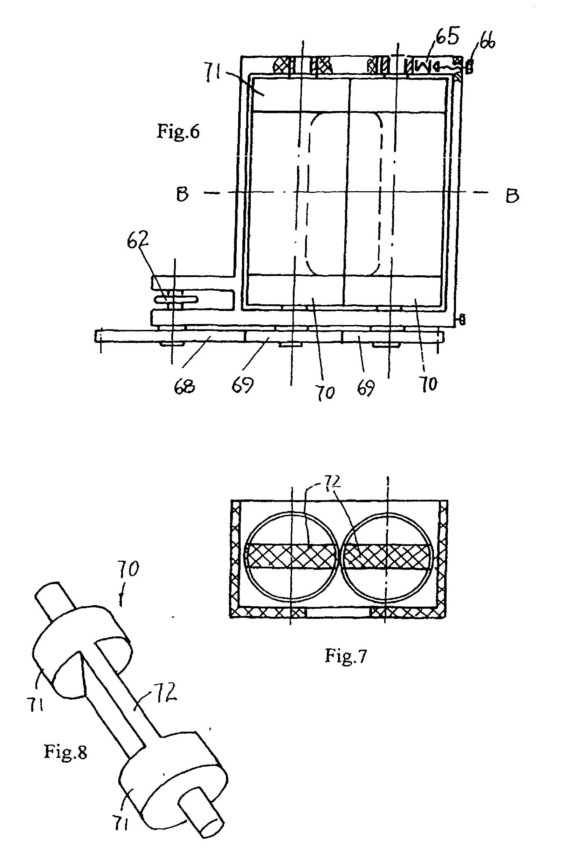

Figs. 6-10 show another embodiment of pulling open-close structure.

Open-close pulling mechanism mounted in said case body 3 includes two symmetrically-arranged rollers 70, of which each has two pulling wheels 71 which connect to one another via a plywood board 72 positioned along the axis of said rollers The maximum width of said plywood board 72 is equal to the diameter of the rollers 70 and the thickness of said board 72 is less than half of radius of said rollers Said two rollers 70 turn towards the opposite direction driven by said chain wheel 62 via transmission means 68 and 69. Two rollers 70 has a pressing means on one of them, such as said screw 66 and support 65

When open-close pulling mechanism as shown by Figs 6-10 is adopted, only one crank 21 may be provided, of which its swing end drives said chain wheel 62 to rotate via said rope 22 and chains connected with said rope The other end of the chain connects to said case body via said extension 67 The force of said reset spring 12 connected between said swing end of said crank 21 and base 1 is stronger than that of spring 67. Said chain wheel 62 may be above flywheel.

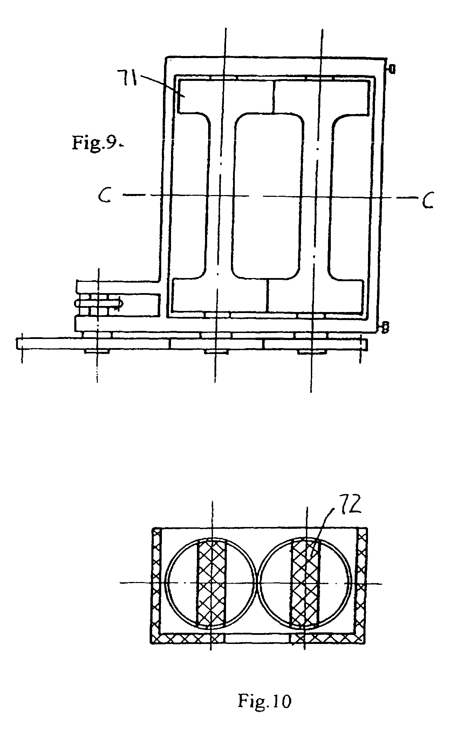

Figs 6-7 show that said roller 70 is in a state of close and said plastic bag 10 is clipped and sealed by two plywood boards 72, and Figs 9-10 show that said roller 71 is in a open state and said plastic bag 10 may go through a room shaped between said boards 72 Said pulling wheels 71 are used to pull said plastic bag 10.

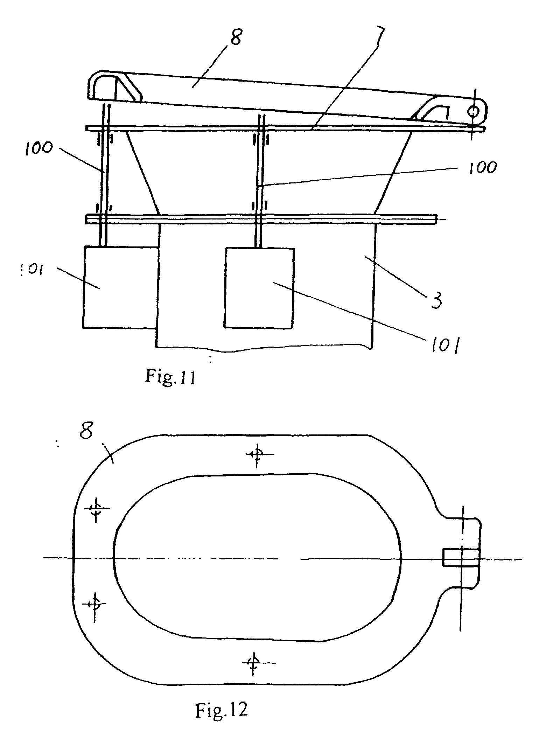

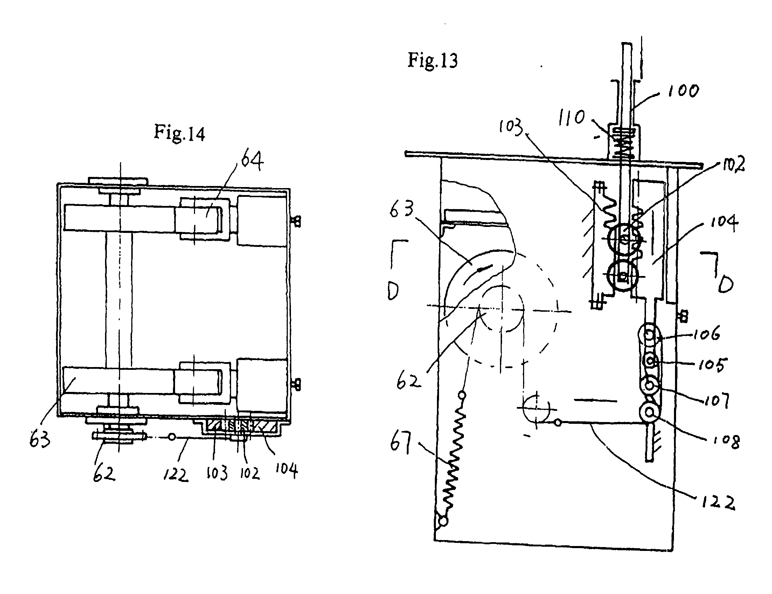

Figs. 11-16 show another embodiment of the present invention, which adopts and open-close pulling mechanism which, is the same as that of Figs. 1-10. The only difference is that the operation is initiated by seating pressing.

Referring to Figs. 11-14. The toilet ware includes a case body 3, a shaped cavity 7 mounted on said case body, a seat ring 8 provided on said shaped cavity, a plastic bag cover (not shown) provided on the periphery of said case body, and open-close pulling mechanism mounted in said case body 3. At least an open- close pulling performing mechanism provided around the periphery of said plastic bag, which has a control rod 100 that may vertically glide. The seat ring 8 has its rear and hinged with said shaped cavity 7, said control rod 100 has its upper end against said ring 8, which is effected by a spring 110 mounted on said rod 100. The lower part of said rod 100 is connected to a transmission mechanism 101, which includes at least one gear wheel 102 movably fixed on said rod 100, a fixed rack joggled with said gear wheel 102 and a gliding gear wheel 104. Provided on said rack 104 there is a pulling rope 122 connected to the open-close pulling mechanism, and said pulling rope 122 is connected to said open-close pulling mechanism by a pulley range expanding mechanism. Said pulley range expanding mechanism includes a first and second movable pulley 105 and 106 mounted on said gliding rack 104, a first and second fixed pulley 107 and 108 and a rope 122 which has one end fixed in said case body 3 and goes on in turn around the first movable pulley 105, the first fixed pulley 107, the second movable pulley 106 and second fixed pulley 108, and is then connected to said open-close pulling mechanism. In Figs. 11-16, the parts identical to those in Figs. 1-10 are indicated by the same marks.

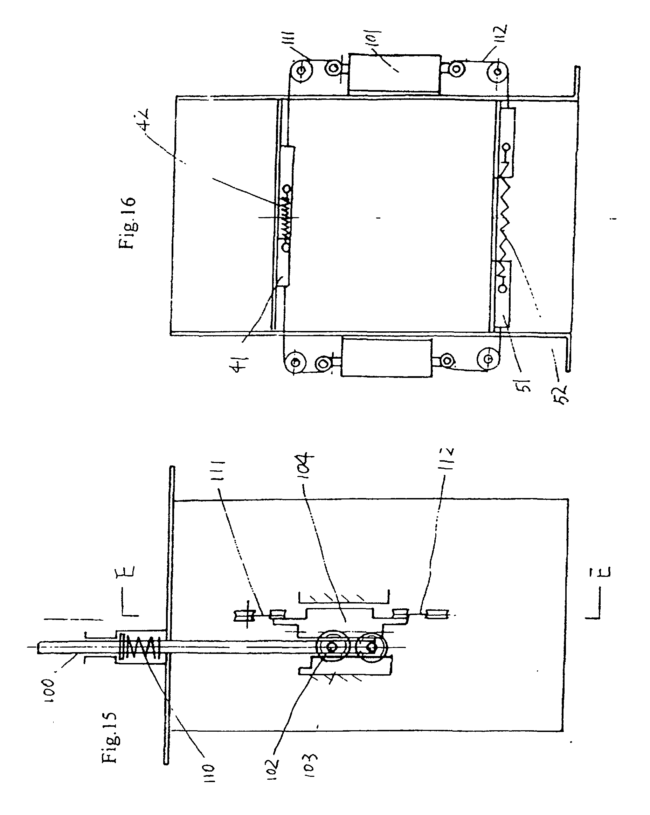

Figs. 15-16 shows another scaling structure including also a pair of upper sealing doors 41 and a pair of lower sealing doors 51, as well as springs 42 and 52 which may force said sealing doors to close. The difference is that on both sides of said case body there is symmetrically provided with a pair of open-close mechanism for sealing doors formed by fixed rack 103, movable rack 104, gear wheel 102 and control rod 100, wherein said upper and lower sealing doors arc connected to the upper and lower ends of movable rack 104 by ropes 111 and 112, so as to pull said sealing door to open and close.

The next is description of the process of operation by reference to Figs. 1-5.

When a man steps on said pedal 2, no matter whether he seats on said seat ring 8 or not, pedal 2 will rotate around point O. Crank 21 then overcomes the force of reset spring 12 and rotate in a counter clockwise way. Rope 22 in turn, under the function of spring 67, moves to the right side of Fig. 2 so as to consequently make chain 62 to rotate. Since there is a surpassing clutch provided between chain wheel 62 and pulling wheel 63, pulling wheel does not move when chain wheel 62 freely rotates. At the same time, crank 23 rotates clockwise bringing rope 24 to move leftward, pulling open upper sealing door 41. Lower sealing door 51 closes at function of spring 52. At this time there is a clean room for excrement. When one left pedal 2, reset spring 12 overcomes the force of spring 67 (the force of spring 12 is stronger than of spring 67) and pulls the plastic bag 10 containing excrement downward via pulling wheel 63 rotated by chain wheel 62, making shaped cavity 7 to be a clean room while upper sealing door41, activated by spring 42, overcomes the force of spring 52 and opens lower sealing door 51, making excrement fall into said excrement holding case, finishing one use of toilet. The using method is similar to that or other embodiments.

The embodiment of the present invention as described above may evidently be varied within concept of the present invention, and all the variations are within capability of ordinary technicians as described by the appended claims. For example chain wheel 62 may be replaced by a belt wheel, said pulling roller may be a drum wheel as shown in WO 97/27795 and an expending ring as described in WO 97/27795 may also be fixed within said shaped cavity 7. Under said pulling wheel there may be provided with a lower sealing door which opens or closes according to its action. Said lower sealing door may be a turning gate rotating around axis.

## Claims

1. A fully automatic toilet ware without flushing including a case body (3), a shaped cavity (7) mounted on said case body (3), a seat ring (8) provided on said shaped cavity (7), a cover (25, 26) for a plastic bag (10) provided over periphery of said case body (3) and an open-close pulling mechanism mounted in said case body (3) for controlling connection between said shaped cavity (7) and an excrement holding case fixed under said case body (3), whereby said case body (3) is fixed on a pedal (2) which has its rear end hinged with a base (1) and its front end structured as a swing end, and between said base (1) and the front end of said pedal (2) there is provided with a press spring (11), and said pedal (2) is at least hinged with at least one crank (21, 23) for controlling the operation of said open-close pulling mechanism, and said crank (21, 23) has one end rolled in a supporting board (13) of said base (1) and the other end connected with said open-close pulling mechanism,
**characterised in that**,
said open-close pulling mechanism includes a sealing means and a pulling means, said sealing means has a pair of upper sealing doors (41) mounted on an upper partition board (31) and a pair of lower sealing doors (51) mounted on a lower partition board (32) and said sealing doors have respectively springs (42, 52, 242, 252) which may force them to close and said upper and lower sealing doors (41, 51) are alternatively opened or closed, and the two upper doors (41) are connected with two pulling ropes (24) through pulleys (25, 26, 27) and the two lower doors (51) are connected with said two upper doors (41) through a pair of pulling ropes (44) and pulleys (43, 53), and the spring (42, 242) of the upper doors (41) is stronger than the spring (52, 252) of the lower doors (51), said pulling means is provided between said upper and lower sealing doors (41, 51) and has a pulling wheel (63) mounted on a transmission shaft (60), a tension wheel (64) and a chain wheel (62) mounted on said transmission shaft (60), and between said chain wheel (62) and pulling wheel (63) there is a surpassing clutch.

2. A toilet ware in accordance with claim 1 **characterised in that** said open-close pulling mechanism includes a sealing means and a pulling means, said sealing means has a pair of upper sealing doors (41) mounted on an upper partition board (31), and said upper sealing doors (41) have springs (42, 242) which may force them closed and are connected with two pulling ropes (24) through pulleys (25, 26, 27), said ropes (24) are connected with a first crank (23), said pulling means are provided under said sealing doors (41) and have a pulling wheel (63) mounted on a transmission shaft (60); there are two cranks (21, 23), one first crank (23) for controlling said upper sealing doors (41) and one second crank (21) for controlling said pulling means.

3. A toilet ware in accordance with claim 2 **characterised in that** said first crank (23) and second crank (21) have opposite direction of movement, and the swing end of said second crank (21) drives a chain wheel (62), which is rotated through a pulling rope (22) and a chain, which is connected with said rope (22); said chain has the other end connected with said case body (3) through an extension spring (67), and said swing end of said second crank (21) and said base (1) are connected with a reset spring (12), said reset spring (12) has a stronger force than that of the extension spring (67), said first crank (23) is connected with a pair of ropes (24), said upper sealing doors (41) are connected to said pair of ropes (24), there is a surpassing clutch provided between said chain wheels (62) and pulling wheels (63).

4. A toilet ware in accordance with claim 1 **characterised in that** said open-close pulling mechanism includes two symmètrically provided rollers (70), of which each has two pulling wheel (71) parts which are connected to one another by a plywood board (72) positioned along the axis of said rollers, said plywood board (72) has its maximum width equal to the diameter of said rollers (70) and its thickness less than the radius of said rollers (70), said two rollers (70) rotate in opposite directions driven by transmission means (68, 69).

5. A toilet ware in accordance with claim 1 or 4 **characterised in that** the swing ends of said cranks (21) drive a chain wheel (62) through a rope (22) and a chain is connected with said rope (22), said rope (22) has the other end connected with said case body (3) through an extension spring (67), between said swing end of said crank (21) and said base (1) there is connected with a reset spring (12), said reset spring (12) has stronger force than that of said extension spring (67).

6. A toilet ware according to one of the claims 1 to 5 **characterised in that** at least one vertically movable control rod (100) is provided over said cover of plastic bag, said rear end of said seat ring (8) is hinged on said shaped cavity (7), said control rod (100) has its upper end against said seat ring (8) and the lower part of said control rod (100) has at least one gear wheel (102) movably fixed, said gear wheel (102) is joggled with one fixed rack (103) and a movable rack (104), said open-close pulling mechanism is connected with said movable rack (104).

7. A toilet ware in accordance with claim 6 **characterised in that** said-open close pulling mechanism is connected with said movable rack (104) through a pulling rope (122).

8. A toilet ware in accordance with claim 7 **characterised in that** on said movable rack (104) there is mounted a first and a second movable pulleys (105, 106), and on said case body there is mounted a first and second fixed pulleys (107, 108), said pulling rope (122) has one end fixed on said case body (3) go on around said first movable pulley (105), first fixed pulley (107), second movable pulley (106) and second fixed pulley (108), and then it is connected with said open-close pulling mechanism.

9. A toilet ware in accordance with claims 1 or 4 **characterised in that** under said pulling wheel there is provided a lower sealing door which may be opened and closed along its action.

10. A toilet ware in accordance with claim 9 **characterised in that** said lower sealing door is a turning door which made rotate around its axis.

11. A toilet ware in accordance with claims 1, 2, 4, 6, 7, 8 or 10 **characterised in that** there is an expanding ring fixed with in said shaped cavity (7).

## Patentansprüche

1. Eine vollständig automatische wasserlose Toilette, bestehend aus einem Gehäuse (3), einem geformten Hohlraum (7), der auf besagtem Gehäuse (3) montiert ist, einem Sitzring (8) auf besagtem geformtem Hohlraum (7), einer Abdeckung (25, 26) für einen Kunststoffbeutel (10) über dem Umfang von besagtem Gehäuse (3) und einem Zugmechanismus zum Öffnen und Schließen, der in besagtem Gehäuse (3) montiert ist, zum Steuern der Verbindung zwischen dem besagten geformten Hohlraum (7) und einem Fäkalienauffangbehälter, der unter besagtem Gehäuse (3) befestigt ist, wobei besagtes Gehäuse (3) auf einer Trittplatte (2) montiert ist, deren hinteres Ende mittels eines Schamiers mit einem Sockel (1) verbunden ist und deren vorderes Ende schwingend ausgeführt ist, wobei zwischen besagtem Sockel (1) und dem vorderen Ende der besagten Trittplatte (2) eine Druckfeder (11) vorgesehen ist, wobei besagte Trittplatte (2) zumindest über ein Scharnier mit zumindest einer Schwinge (21, 23) zum Steuern der Betätigung des besagten Zugmechanismus zum Öffnen und Schließen verbunden ist, und wobei ein Ende der besagten Schwinge (21, 23) in einer Stützplatte (13) von besagtem Sockel (1) rollt und das andere Ende mit besagtem Zugmechanismus zum Öffnen und Schließen verbunden ist,
**dadurch gekennzeichnet, dass**
besagter Zugmechanismus zum Öffnen und Schließen eine Verschluss- und eine Zugvorrichtung umfasst, wobei besagte Verschlussvorrichtung aus zwei oberen Verschlusstüren (41) besteht, die auf einer oberen Trennplatte (31) montiert sind, und aus zwei unteren Verschlusstüren (51), die auf einer unteren Trennplatte (32) montiert sind, wobei besagte Verschlusstüren jeweils mit Federn (42, 52, 242, 252) versehen sind, die ein Schließen der Verschlusstüren bewirken, wobei besagte obere und untere Verschlusstüren (41, 51) abwechselnd geöffnet bzw. geschlossen sind, wobei die zwei oberen Verschlusstüren (41) über Rillenscheiben (25, 26, 27) mit zwei Zugseilen (24) verbunden sind, wobei die unteren Verschlusstüren (51) über zwei Zugseile (44) und Rillenscheiben (43, 53) mit den besagten zwei oberen Verschlusstüren verbunden sind, wobei die Feder (42, 242) der oberen Verschlusstüren (41) stärker ist als die Feder (52, 252) der unteren Verschlusstüren (51), wobei besagte Zugvorrichtung zwischen den besagten oberen und unteren Verschlusstüren (41, 51) vorgesehen ist und über ein Zugrad (63) verfügt, das auf einer Kraftübertragungswelle (60) montiert ist, sowie über ein Spannrad (64) und ein Kettenrad (62), die auf besagter Kraftübertragungswelle (60) montiert sind, und wobei sich zwischen besagtem Kettenrad (62) und dem Zugrad (63) eine Entlastungskupplung befindet.

2. Eine Toilette nach Anspruch 1, **dadurch gekennzeichnet, dass** besagter Zugmechanismus zum Öffnen und Schließen eine Verschluss- und eine Zugvorrichtung umfasst, wobei besagte Verschlussvorrichtung aus zwei oberen Verschlusstüren (41) besteht, die auf einer oberen Trennplatte (31) montiert sind, wobei die besagten oberen Verschlusstüren (41) mit Federn (42, 242) versehen sind, die die Verschlusstüren geschlossen halten, und über Rillenscheiben (25, 26, 27) mit zwei Zugseilen (24) verbunden sind, wobei besagte Zugseile (24) mit einer ersten Schwinge (23) verbunden sind, und wobei besagte Zugvorrichtung unter besagten Verschlusstüren (41) vorgesehen ist und über ein Zugrad (63) verfügt, das auf einer Kraftübertragungswelle (60) montiert ist; es sind zwei Schwingen (21, 23) vorhanden, eine erste Schwinge (23) zum Steuern der besagten oberen Verschlusstüren (41) und eine zweite Schwinge (21) zum Steuern von besagtem Zugmechanismus.

3. Eine Toilette nach Anspruch 2, **dadurch gekennzeichnet, dass** besagte erste Schwinge (23) und besagte zweite Schwinge (21) die entgegengesetzte Bewegungsrichtung haben und das schwingende Ende von besagter zweiter Schwinge (21) ein Kettenrad (62) betätigt, das mittels eines Zugseils (22) und einer Kette, die mit besagtem Seil (22) verbunden ist, gedreht wird; das andere Ende besagter Kette ist mittels einer Zugfeder (67) mit besagtem Gehäuse (3) verbunden, und das besagte schwingende Ende der besagten zweiten Schwinge (21) und besagter Sockel (1) sind mit einer Rückholfeder (12) verbunden, wobei besagte Rückholfeder (12) eine stärkere Kraft auswirken kann als die Zugfeder (67), wobei besagte erste Schwinge (23) mit zwei Seilen (24) verbunden ist, wobei besagte obere Verschlusstüren (41) mit den besagten zwei Seilen (24) verbunden sind, und wobei zwischen besagten Kettenrädern (62) und Zugrädern (63) eine Entlastungskupplung vorgesehen ist.

4. Eine Toilette nach Anspruch 1, **dadurch gekennzeichnet, dass** besagter Zugmechanismus zum Öffnen und Schließen zwei symmetrisch angeordnete Rollen (70) umfasst, von denen jede über zwei Zugrollenteile (71) verfügt, die mittels einer entlang der Achse der besagten Rollen positionierten Sperrholzplatte (72) miteinander verbunden sind, wobei die maximale Breite der Sperrholzplatte (72) dem Durchmesser von besagten Rollen (70) entspricht und ihre Dicke geringer ist als der Radius der besagten Rollen (70), und wobei sich die besagten Rollen (70) von besagten Kraftübertragungsvorrichtungen (68, 69) angetrieben in entgegengesetzter Richtung drehen.

5. Eine Toilette nach Anspruch 1 oder 4, **dadurch gekennzeichnet, dass** die schwingenden Enden der besagten Schwingen (21) ein Kettenrad (62) betätigen, und zwar mittels eines Seils (22), und dass mit besagtem Seil (22) eine Kette verbunden ist, wobei das andere Ende von besagtem Seil (22) mittels einer Zugfeder (67) mit besagtem Gehäuse (3) verbunden ist, und wobei das besagte schwingende Ende von besagter Schwinge (21) und besagter Sockel (1) mit einer Rückholfeder (12) verbunden sind, wobei besagte Rückholfeder (12) eine stärkere Kraft auswirken kann als die Zugfeder (67).

6. Eine Toilette nach einem der Ansprüche 1 bis 5, **dadurch gekennzeichnet, dass** über besagter Abdeckung des Kunststoffbeutels mindestens eine vertikal bewegliche Steuerstange (100) vorgesehen ist und dass das besagte hintere Ende des besagten Sitzrings (8) mit einem Scharnier an dem besagten geformten Hohlraum (7) befestigt ist, wobei das obere Ende besagter Steuerstange (100) an besagtem Sitzring (8) anstößt und am unteren Teil besagter Steuerstange (100) mindestens ein Zahnrad (102) beweglich befestigt ist, wobei besagtes Zahnrad (102) mit einer feststehenden Zahnstange (103) und einer beweglichen Zahnstange (104) im Eingriff ist und wobei besagter Zugmechanismus zum Öffnen und Schließen mit besagter beweglicher Zahnstange (104) verbunden ist.

7. Eine Toilette nach Anspruch 6, **dadurch gekennzeichnet, dass** besagter Zugmechanismus zum Öffnen und Schließen mittels eines Zugseils (122) mit besagter beweglicher Zahnstange (104) verbunden ist.

8. Eine Toilette nach Anspruch 7, **dadurch gekennzeichnet, dass** an besagter beweglicher Zahnstange (104) eine erste und eine zweite bewegliche Rillenscheibe (105, 106) befestigt sind und dass an besagtem Gehäuse eine erste und eine zweite feststehende Rillenscheibe (107, 108) befestigt sind, wobei ein Ende von besagtem Zugseil (122) an besagtem Gehäuse (3) befestigt ist und das Seil um die besagte erste bewegliche Rillenscheibe (105), die erste feststehende Rillenscheibe (107), die zweite bewegliche Rillenscheibe (106) und die zweite feststehende Rillenscheibe (108) verläuft und dann mit besagtem Zugmechanismus zum Öffnen und Schließen verbunden ist.

9. Eine Toilette nach Anspruch 1 oder 4, **dadurch gekennzeichnet, dass** unter besagtem Zugrad eine untere Verschlusstür vorgesehen ist, die durch seine Betätigung geöffnet und geschlossen werden kann.

10. Eine Toilette nach Anspruch 9, **dadurch gekennzeichnet, dass** es sich bei der besagten unteren Verschlusstür um eine Drehtür handelt, die sich um die eigene Achse drehen kann.

11. Eine Toilette nach Anspruch 1, 2, 4, 6, 7, 8 oder 10, **dadurch gekennzeichnet, dass** innerhalb des besagten geformten Hohlraums (7) ein Spreizring befestigt ist.

## Revendications

1. Des toilettes sans eau et entièrement automatiques, comprenant un réceptacle (3), un espace creux (7) moulé, qui est monté sur ledit réceptacle (3), une lunette de siège (8) sur ledit espace creux (7) moulé, un revêtement (25, 26) pour un sachet en plastique (10) sur le pourtour dudit réceptacle (3) et un mécanisme de traction pour l'ouverture et la fermeture, qui est monté dans ledit réceptacle (3), pour la commande de la liaison entre ledit espace creux (7) moulé et un récipient collecteur de matières fécales, qui est fixé sous ledit réceptacle (3), ledit réceptacle (3) étant monté sur une plaque à pédale (2), dont l'extrémité arrière est reliée au moyen d'une charnière à un socle (1) et dont l'extrémité avant est réalisée de façon oscillante, un ressort de pression (11) étant prévu entre ledit socle (1) et l'extrémité avant de ladite plaque à pédale (2), ladite plaque à pédale (2) étant reliée au moins par une charnière à au moins un bras oscillant (21, 23) pour la commande de l'actionnement dudit mécanisme de traction pour l'ouverture et la fermeture, et une extrémité dudit bras oscillant (21, 23) roulant dans une plaque support (13) dudit socle (1) et l'autre extrémité étant reliée au mécanisme de traction concerné pour l'ouverture et la fermeture,
**caractérisé**
**en ce que** ledit mécanisme de traction pour l'ouverture et la fermeture comprend un dispositif de fermeture et un dispositif de traction, ledit dispositif de fermeture comprenant deux portes de fermeture (41) supérieures, qui sont montées sur une plaque de séparation (31) supérieure, et deux portes de fermeture (51) inférieures, qui sont montées sur une plaque de séparation (32) inférieure, lesdites portes de fermeture étant pourvues chacune de ressorts (42, 52, 242, 252), qui entraînent une fermeture des portes de fermeture, lesdites portes de fermeture supérieures et inférieures (41, 51) étant ouvertes ou fermées alternativement, moyennant quoi les deux portes de fermeture (41) supérieures sont reliées au moyen de poulies à rainure (25, 26, 27) à deux câbles de traction (24), les portes de fermeture (51) inférieures étant reliées au moyen de deux câbles de traction (44) et poulies à rainure (43, 53) aux deux portes de fermeture supérieures concernées, le ressort (42, 242) des portes de fermeture (41) supérieures étant plus fort que le ressort (52, 252) des portes de fermeture (51) inférieures, ledit dispositif de traction étant prévu entre lesdites portes de fermeture supérieures et inférieures (41, 51) et disposant d'une roue de traction (63), qui est montée sur un arbre de transmission de force (60), ainsi que d'une roue de serrage (64) et d'une roue à chaîne (62), qui sont montées sur ledit arbre de transmission de force (60), et moyennant quoi un accouplement de décharge se trouve entre ladite roue à chaîne (62) et la roue de traction (63).

2. Des toilettes selon la revendication 1, **caractérisées en ce que** ledit mécanisme de traction pour l'ouverture et la fermeture comprend un dispositif de fermeture et un dispositif de traction, ledit dispositif de fermeture comprenant deux portes de fermeture supérieures (41), qui sont montées sur une plaque de séparation (31) supérieure, lesdites portes de fermeture supérieures (41) étant pourvues de ressorts (42, 242), qui maintiennent fermées les portes de fermeture, et étant reliées à deux câbles de traction (24) au moyen de poulies à rainure (25, 26, 27), moyennant quoi lesdits câbles de traction (24) sont reliés à un premier bras oscillant (23), et moyennant quoi ledit dispositif de traction est prévu sous lesdites portes de fermeture (41) et dispose d'une roue de traction (63), qui est montée sur un arbre de transmission de force (60) ; il y a deux bras oscillants (21, 23), un premier bras oscillant (23) pour la commande desdites portes de fermeture (41) supérieures et un deuxième bras oscillant (21) pour la commande dudit mécanisme de traction.

3. Des toilettes selon la revendication 2, **caractérisées en ce que** ledit premier bras oscillant (23) et ledit second bras oscillant (21) ont le sens de déplacement opposé et l'extrémité oscillante dudit second bras oscillant (21) actionne une roue à chaîne (62), que l'on fait tourner au moyen d'un câble de traction (22) et d'une chaîne, qui est reliée au câble (22) concerné ; l'autre extrémité de ladite chaîne est reliée au moyen d'un ressort de traction (67) au réceptacle (3) concerné, et ladite extrémité oscillante dudit second bras oscillant (21) et ledit socle (1) sont reliés à un ressort de rappel (12), ledit ressort de rappel (12) entraînant plus de force que le ressort de traction (67), moyennant quoi ledit premier bras oscillant (23) est relié aux deux câbles (24), lesdites portes de fermeture supérieures (41) étant reliées aux deux câbles (24) concernés, et moyennant quoi un accouplement de décharge est prévu entre les roues à chaîne (62) et les roues de traction (63) concernées.

4. Des toilettes selon la revendication 1, **caractérisées en ce que** ledit mécanisme de traction pour l'ouverture et la fermeture comprend deux roulettes (70) disposées de façon symétrique, dont chacune dispose de deux parties de roulettes de traction (71), qui sont reliées entre elles au moyen d'un panneau de contre-plaqué (72) positionné le long de l'axe desdites roulettes, la largeur maximale du panneau de contre-plaqué (72) correspondant au diamètre desdites roulettes (70) et leur épaisseur étant inférieure au rayon desdites roulettes (70), et moyennant quoi lesdites roulettes (70) tournent dans le sens opposé entraînées par lesdits dispositifs de transmission de force (68, 69).

5. Des toilettes selon la revendication 1 ou 4, **caractérisées en ce que** les extrémités oscillantes desdits bras oscillants (21) actionnent une roue à chaîne (62), et ce au moyen d'un câble (22), et **en ce qu'**une chaîne est reliée au câble (22) concerné, moyennant quoi l'autre extrémité dudit câble (22) est reliée au réceptacle (3) concerné au moyen d'un ressort de traction (67), et moyennant quoi ladite extrémité oscillante dudit bras oscillant (21) et ledit socle (1) sont reliés à un ressort de rappel (12), moyennant quoi ledit ressort de rappel (12) exerce plus de force que le ressort de traction (67).

6. Des toilettes selon l'une quelconque des revendications 1 à 5, **caractérisées en ce qu'**il est prévu au moins une tige de commande (100) mobile verticalement au-dessus dudit revêtement du sachet plastique et **en ce que** ladite extrémité arrière de ladite lunette de siège (8) est fixée avec une charnière sur ledit espace creux (7) formé, l'extrémité supérieure de ladite tige de commande (100) butant sur ladite lunette de siège (8) et au moins une roue dentée (102) étant fixée de façon mobile sur la partie inférieure de ladite tige de commande (100), moyennant quoi ladite roue dentée (102) est en prise avec une crémaillère (103) fixe et une crémaillère (104) mobile et ledit mécanisme de traction pour l'ouverture et la fermeture est relié à ladite crémaillère (104) mobile.

7. Des toilettes selon la revendication 6, **caractérisées en ce que** ledit mécanisme de traction pour l'ouverture et la fermeture est relié au moyen d'un câble de traction (122) à ladite crémaillère (104) mobile.

8. Des toilettes selon la revendication 7, **caractérisées en ce qu'**une première et une seconde poulies à rainure mobiles (105, 106) sont fixées sur ladite crémaillère (104) mobile et **en ce qu'**une première et une seconde poulies à rainure (107, 108) fixes sont fixées sur ledit réceptacle, une extrémité dudit câble de traction (122) étant fixée sur ledit réceptacle (3) et le câble étant disposé autour de ladite première poulie à rainure (105) mobile, de la première poulie à rainure (107) fixe, de la seconde poulie à rainure (106) mobile et de la seconde poulie à rainure (108) fixe et étant relié au mécanisme de traction concerné pour l'ouverture et la fermeture.

9. Des toilettes selon la revendication 1 ou 4, **caractérisées en ce qu'**il est prévu sous ladite roue de traction une porte de fermeture inférieure, qui peut être ouverte et fermée par son actionnement.

10. Des toilettes selon la revendication 9, **caractérisées en ce que**, en ce qui concerne ladite porte de fermeture inférieure, il s'agit d'une porte pivotante qui peut tourner autour de son propre axe.

11. Des toilettes selon les revendications 1, 2, 4, 6, 7, 8 ou 10, **caractérisées en ce qu'**une bague d'écartement est fixée à l'intérieur dudit espace creux (7) formé.
